# EUROPEAN PATENT SPECIFICATION

(11) **EP 2 650 324 B1**
(45) Date of publication and mention of the grant of the patent: **11.03.2015**
(21) Application number: 13163161.6
(22) Date of filing: 10.04.2013
(51) Int. Cl.: C08J 11/06, B29B 17/04

(54) **Method for the Recycling of Plastics Products**
Verfahren zur Wiederverwertung von Kunststofferzeugnissen
Procédé de recyclage de produits en plastique

(30) Priority: 12.04.2012 GB 201206461
(43) Date of publication of application: 16.10.2013
(73) Proprietor: Linpac Packaging Limited, West Yorkshire WF7 5DE (GB)
(72) Inventor: Davey, Alan, Selby, North Yorkshire YO8 9RG (GB); Elkington, Ben, Cleckheaton, West Yorkshire BD19 4NZ (GB)
(74) Representative: Jacob, Reuben Ellis

(56) References cited:
- EP-A2- 0 369 341
- US-A- 4 199 109
- US-A- 5 934 577
- DATABASE WPI Week 198839 Thomson Scientific, London, GB; AN 1988-275352 XP002699047, & JP S63 202409 A (MITSUBISHI KASEI VINYL KK) 22 August 1988 (1988-08-22)
- DATABASE WPI Week 201054 Thomson Scientific, London, GB; AN 2010-K10690 XP002699048, & WO 2010/087104 A1 (KUREHA CHEM IND CO LTD) 5 August 2010 (2010-08-05)

## Description

The present invention relates to the recycling of multilayer products and more particularly, to a method for the treatment of multilayered plastics sheets and components and their manufacturing and post-use waste. Multilayered sheets are used in the production of a variety of plastics products, such as containers.

For example, plastics containers are widely used to package, store, transport and display fresh food. They can be made by a variety of techniques, but the commonly accepted methods for high volume production are injection moulding, blow moulding and thermo-forming. In this latter event, plastics flakes and/or pellets are extruded in the form of sheets, which are subsequently moulded into the required shape of container.

Clear plastics containers may be made of polethylene terephthalate (PET). The use of PET provides a high clarity product that enables a user to view readily the contents of the container. Recycled PET may also be used, to manufacture such containers offering environmental and, sometimes, economical benefits. These containers may be sealed with a lidding film to protect the food within the container from the surrounding environment, or to create a modified atmosphere within the closed package, so-called Modified Atmosphere Packaging (MAP) or Controlled Atmosphere Packaging (CAP). Although it is perfectly possible to attach a lidding film to PET containers, it is an inconvenient substrate for sealing and requires high sealing temperatures, long sealing times, expensive materials and is particularly sensitive to contamination on the sealing face arising from inadvertent transfer from the goods being packaged.

A known solution to the problem outlined above is making the containers from PET coated with a layer of polyethylene (PE). The PE provides a surface that a lidding film readily attaches to, thereby facilitating the production of sealed containers. The PE layer can be applied by a variety of techniques including, but not limited to, thermal lamination, adhesive lamination, co-extrusion and extrusion coating.

There are however environmental consequences of using a PET/PE product. During the manufacture of PET/PE containers by thermo-forming, multiple containers are formed from large and often continuous sheets of PET/PE material and individual containers are cut from these large sheets. Waste material is formed from those parts of the large sheets that are not used in the individual containers. This waste material, known as "skeletal waste", contains a mixture of PET and PE, which when re-melted and homogenised as part of a re-processing step forms a cloudy product that cannot be used to form clear plastics containers. The presence of the PE disrupts the optical properties of the PET and so the PET/PE product is of a lower clarity than a pure, single polymer PET product. Since clear plastics containers are more desirable than opaque plastics containers, the waste is less economical to recycle.

An alternative route for the manufacture of food trays as described above is by means of injection moulding. Then there is no skeletal waste as described above for thermo-forming, but there is also no easy and cost-effective way to apply the layer of PE to the tray that will facilitate easy sealing to a top-film.

Additionally, strict purity standards are applicable to the use of recycled PET in the food industry. For example, Commission Regulation (EC) 282/2008 of 27^{th} March 2008 regulates the quality of recycled plastics materials and articles intended to come into contact with foods and the removal of unwanted substances from the PET requires a so-called "super-clean" recycling process. The currently available super-cleaning processes all necessitate processing the PET flakes at temperatures well above the melting point of PE, and so are not suitable for processing of PET/PE flakes as this leads to widespread clumping and agglomeration as a result of the PE sticking to itself. Whilst Regulation (EC) 282/2008 is framed around processing of post-consumer PET materials and specifically excludes in-house factory waste (skeletal, off-cuts etc) it contains useful protocols for operation of super-cleaning systems that lead to enhanced security of food safety in the use of recycled polymers, whether of post consumer or factory origin. It is note-worthy that there exists a growing trend to collection of post-use PET/PE trays via household recycling collections.

Furthermore, the presence of PE on PE affected PET flakes renders difficult the conventional technique for processing PET, whereby the flake is pre-crystallised and dried at elevated temperatures, prior to extrusion into sheet or into other formed articles. This is because the presence of PE leads to soft and sticky material at the temperatures normally utilised for crystallising and drying of PET with a resultant tendency to clump and agglomerate. Removing the PE would usefully facilitate these processes.

US 4,199,109 describes a multilayer plastic sheet comprising at least a layer of nylon or saponification product of ethylene-vinyl acetate copolymer and a layer of polyethylene or polypropylene. This publication describes a process in which articles comprising the multilayer sheet are firstly heated and the layers are subsequently separated by applying a shearing force in a second separate step.

JP 63-202409 relates to a process for peeling a laminate off a surface layer using rollers thereby obtaining two separate film sheets. WO 2010/087104 describes a multilayer product with a polyester resin layer and a polyglycolic acid layer. The product is crushed. The layers of the ground material are separated using shearing force and sorted using a gravity/density separator.

US 5,934,577 describes a multilayer materials with a base plastic (e.g. PE or PP) and a second plastic (chosen from polyamides and ethylene-vinyl alcohol copolymers e.g. EVOH) separated by an adhesive layer (e.g. polyolefin grafted with maleic anhydride). The material is heated, then shredded and the particles are separated by electrostatic separation.

The growing use of recycled plastics as food contact material creates a need for an economical and efficient method for treating contaminated plastics material and it is an object of this invention to mitigate problems such as those described above.

According to a first aspect of the invention, there is provided a method of treating of a multilayer article comprising at least one layer of a first plastics material, at least one layer of a second plastics material and at least one layer of a third material between the layer of first material and the layer of first plastics material and the layer of second plastics material, wherein the first plastics material is amorphous polyethylene terephthalate (PET), the second plastics material is polyethylene (PE) and the third material is ethylene vinyl acetate (EVA); the method comprising the steps of (a) physically separating the first material from the second material through shearing action and application of heat; and (b) sorting the first material from the second material.

The PET/PE articles (and their pre-cursors, wastes and by-products) are advantageously first rendered into a size band where their critical dimensions are in the range 2-20mm. This can be effected with a cutting or shredding step.

The process was first developed using articles (and their pre-cursors, wastes and by-products) comprising a PET sheet laminated with a PE layer. The PE contaminant was successfully removed and high purity PET (>99%) was obtained.

In the case of a PET/EVA/PE multilayer structure, the EVA layer is strongly bonded to the PE layer, but the peel strength between the EVA and PET layer is weakened with the application of heat. The separation step may comprise the step of heating at a temperature above the softening temperature of the third plastics material to improve the separation of the first layer from the second layer. The preferred heating temperature ranges from 80 to 100°C.

The separation step may comprise the step of introducing the product into a separation vessel and mechanically shearing the article against itself. Alternatively or in addition, one or more static blades can be mounted within the separation vessel. The article may be pre-cut and/or pre-shredded into smaller elements. The elements rub against each other so that the second material layer detaches itself from the first material layer as a result of shearing action applied at the interlayer boundary between the first and second layers. The output of the separation step is a mixture of flakes made of the first material and flakes made of the second material.

As the temperature increases in the separation vessel, the first material and/or the second material (in particular in the case of plastics materials) will have a tendency to form lumps and to stick to the walls of the separating vessel. Preferably, the separation vessel comprises one or more stirring elements to improve the shearing action and to prevent the formation of lumps and agglomerates.

The first material (PET) has a first density and the second (PE) has a second density different from that of the first material. This is particularly advantageous where a density based sorting step is combined to the first separation step. A first example of density based sorting step is a static sorting method in which the output product of the separation step is placed in a suitable medium, such as water, so that the first material and the second material will either "swim" or "sink" according to their respective densities. In a second example of density based sorting step, centrifugal force is applied to force and accelerate the separation of the flakes made of the second material from the flakes made of the first material. Fast and efficient sorting is thereby achieved.

The present method can comprise the further step of (c) drying the sorted first material. This can be carried out during the sorting step and/or as a subsequent drying step. For example, if carried out during the sorting step, the mixture can be sorted by application of a centrifugal force which will separate the first material, not only from the second material but also from the liquid medium, thereby drying the first material. Heat may be applied within the sorting container to further dry the first material. Alternatively, the first material may be further dried in a subsequent step, for example with a drying hopper. High purity can therefore be achieved.

Thus, the invention seeks to provide a simple and efficient method for processing contaminated plastics products to obtain high purity plastics material, suitable for re-use in clear products and which is also suitable for restoring the material to its original food contact status via an appropriate super-cleaning route.

The invention will be further described with reference to the accompanying drawings and figures.
Figure 1 is a flow diagram of a process according to the present invention;
figure 2 is a schematic representation of a PE laminated PET sheet; and

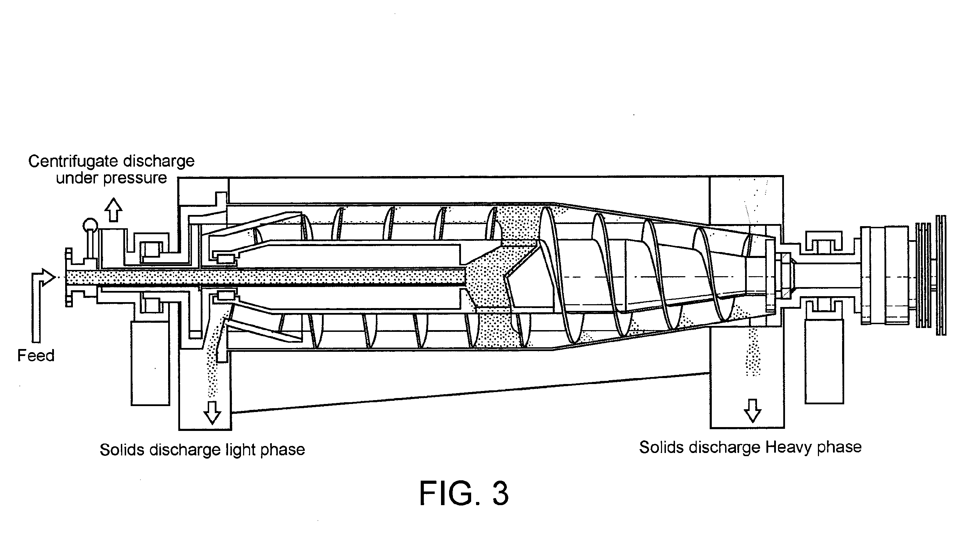

figure 3 is a schematic representation of a centrifugal density separation apparatus for use in a process according to the present invention.

Within the context of the invention, the expression "multilayer product" refers to any article comprising a structure comprising two or more plastics layers. The second and subsequent layers can be obtained using any conventional techniques such as coating, lamination, co-extrusion and extrusion coating. Indeed, the invention can also be deployed on multi-layer structures of dissimilar materials, such as plastics/aluminium or plastics/paper.

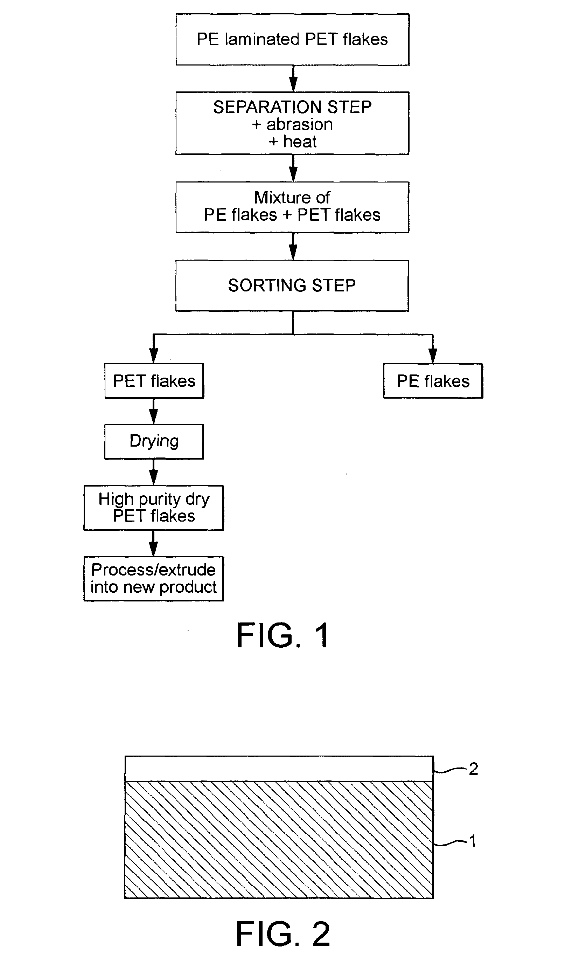

Referring to figure 1, there is illustrated a process according to the present invention, applied to the treatment of a PET sheet comprising a PE lamination layer as the second material to be eliminated.

Polyethylene terephthalate (PET) is a thermoplastic polymer which exists in an amorphous clear state or a (semi-) crystalline opaque or white state. While virgin PET is often supplied as a semi-crystallised granulate, ground material, flakes or recycled or skeletal waste materials would normally consist of amorphous PET.

PET is hygroscopic and must be dried, for example in a drying hopper, to prevent the degradation of the material due to the presence of absorbed moisture. If PET is not dried, hydrolysis occurs during the extrusion, which will affect the mechanical properties and quality of the finished product. Additionally, amorphous plastics materials such as PET will become sticky and difficult to process during the drying step, as their temperature exceeds their respective glass transition temperatures (of around 65-70 degrees Celsius in the case of PET). The material softens, and agglomerates to form lumps which stick to the walls of the drying hopper. This can be prevented by crystallising the plastics material before drying it. Once crystalline, the material does not soften until it achieves the melt temperature of about 240 degrees Celsius in the case of PET. Some degree of agitation is often necessary to avoid clumping.

An example of a process according to the present invention is described below.

Plastics products to be recycled are provided which are made for example of PET sheets laminated with a layer of PE, or trays arising in the waste stream or as a reject stream in a production environment, or cut flakes of skeletal production waste. PE laminated PET used in the food packaging industry typically has a PE layer of less than 10% of the total thickness. For example, the PET layer can have a thickness of about 400 microns and a PE layer of 20-50 microns. When the PET sheet has been laminated using for example a roller lamination process, then the multilayer structure may comprise a layer of an adhesive material such as EVA.

The products are shredded or granulated into 6mm to 16mm flakes prior to entering the separation process. The PET/PE flakes are introduced into a separation vessel to carry out the first step during which the PE is physically liberated from the PET flakes. This requires a degree of mechanical shear, arising for example by mechanically abrading the product against itself and/or one or more static blades. Shear is applied at the interlayer boundary between the PET layer and the PE layer. When amorphous PET is heated, the material softens, and develops a tendency to agglomerate in the vessel and it is therefore advantageous to use a stirring element, such as one or more stirring blades, to prevent the formation of lumps.

At the same time, heat is applied for example in the form of hot air. The temperature is increased, preferably to a temperature of from 80 to 100°C, and for a period of from 60 to 180 minutes. Most preferably, the liberation step is carried out at about 90°C and with a residence time of about 120 minutes. The combination of temperature and shear occurring as a result of the self-abrasion and the particular disposition of blades within the separation vessel liberates the PE lamination from the PET sheet. The resulting output is a mixture of PE film and PET sheet that forms an intermediate for the sorting stage. The average particle size of the output material is preferably from about 2 to 16 mm.

In the sorting stage, the difference in densities between the PE lamination film (approximately 0.94g.cm⁻³) and the PET sheet (approximately 1.3 g.cm⁻³) is exploited, to separate the two materials from each other.

A forced density separation is preferred in which centrifugal force is applied to separate the lighter material from the heavier material. The preferred separation medium for the PE/PET separation step is water for its density, but also because it is environmentally friendly and readily available.

The PET sheet is recovered as the "solid discharge heavy phase" and the PE lamination film is recovered as the "solid discharge light phase". The PET contained in the solid discharge heavy phase may be dried within the forced density separation system if it is so designed, and/or, if required may be further dried, for example in a drying-hopper and the resulting PET is dry high purity PET flakes (>99% purity). The PE contained in the solid discharge light phase can also be further dried if required to obtain dry PE flakes for recycling, or if present in insufficient amount, it can simply be disposed of.

The sorting can alternatively be carried out using a static separation technique, in which the PE/PET mixture is introduced into a tank containing a separation liquid. The separation medium is chosen such that the lighter material, i.e. PE will "swim" near the surface of the liquid, while the heavier material, i.e. PET, will "sink" to the bottom of the tank. Another sorting method involves wind or air separating systems that make use of the different ballistic characteristics of denser, thicker PET flakes when compared to lighter, thinner PE flakes. In another embodiment of the present invention, sorting can be achieved using electrostatic systems making use of the different ways that PE and PET accept electrical charges, and/or the way that those electrical charges decay.

The second material may be present in the product to be recycled as a layer obtained by lamination, co-extrusion, extrusion coating and other techniques, although it has been observed that highest purity is achieved using laminated products as a starting material. For example, a PET purity of more than 99% has been observed, when an article comprising a PET layer with a PE lamination was separated by abrading and applying heat, the subsequently sorting using a forced density sorting method (using centrifugal force), and subsequent drying in a drying hopper.

Thus, from the above description, it can be seen that the present invention provides a simple and efficient method for processing contaminated plastics materials to obtain high purity plastics with the potential to be upgraded further by suitable super-cleaning for use in direct food contact when necessary.

## Claims

1. A method of treating of a multilayer article comprising at least one layer of a first plastics material, at least one layer of a second plastics material and at least one layer of a third material between the layer of first plastics material and the layer of second plastics material, wherein the first material is amorphous polyethylene terephthalate (PET), the second plastics material is polyethylene (PE) and the third material is ethylene vinyl acetate (EVA); the method comprising the steps of:
(a) physically separating the first material from the second material through shearing action and application of heat; and
(b) sorting the first material from the second material.

2. The method of claim 1, wherein the separation step comprises heating at a temperature of from 80 to 100°C.

3. The method of any one of the preceding claims, wherein the separation step comprises introducing the product into a separation vessel and mechanically shearing the article against itself and/or against one or more static blades.

4. The method of claim 3, wherein the separation vessel comprises one or more stirring elements.

5. The method of any one of the preceding claims wherein the shearing action is applied between the first layer and the second layer.

6. The method of claim 1, wherein the sorting step comprises applying centrifugal force to separate the first material from the second material.

7. The method of claim 6, wherein the sorting step is carried out in a liquid medium, such as water.

8. The method of any one of the preceding claims, further comprising the step of (c) drying the sorted first material.

9. The method of claim 8, wherein the drying step is carried out during the sorting step and/or as a subsequent drying step.

10. The method of any one of the preceding claims, further comprising the step of cutting and/or shredding the article prior to the separation step (a).

## Patentansprüche

1. Verfahren zum Behandeln eines mehrschichtigen Artikels umfassend mindestens eine Schicht eines ersten Kunststoffmaterials, mindestens eine Schicht eines zweiten Kunststoffmaterials und mindestens eine Schicht eines dritten Materials zwischen der Schicht des ersten Kunststoffmaterials und der Schicht des zweiten Kunststoffmaterials, wobei das erste Material amorphes Polyethylenterephthalat (PET), das zweite Kunststoffmaterial Polyethylen (PE) und das dritte Material Ethylenvinylacetat (EVA) ist;
wobei das Verfahren folgende Schritte umfasst:
(a) physikalisches Abtrennen des ersten Materials vom zweiten Material durch einen Schneidevorgang und die Anwendung von Hitze; und
(b) Trennen des ersten Materials vom zweiten Material.

2. Verfahren nach Anspruch 1, wobei der Abtrennschritt das Erhitzen bei einer Temperatur von 80 bis 100°C umfasst.

3. Verfahren nach einem der vorhergehenden Ansprüche, wobei der Abtrennschritt das Einführen des Produkts in ein Abtrenngefäß und das mechanische Schneiden des Artikels gegen sich selbst und/oder gegen eine oder mehrere statische Schneiden umfasst.

4. Verfahren nach Anspruch 3, wobei das Abtrenngefäß ein oder mehrere Rührelemente umfasst.

5. Verfahren nach einem der vorhergehenden Ansprüche, wobei der Schneidevorgang zwischen der ersten Schicht und der zweiten Schicht angewandt wird.

6. Verfahren nach Anspruch 1, wobei der Trennschritt das Anlegen einer Zentrifugalkraft umfasst, um das erste Material vom zweiten Material abzutrennen.

7. Verfahren nach Anspruch 6, wobei der Trennschritt in einem flüssigen Medium, wie beispielsweise Wasser, ausgeführt wird.

8. Verfahren nach einem der vorhergehenden Ansprüche ferner umfassend den Schritt des (c) Trocknens des getrennten ersten Materials.

9. Verfahren nach Anspruch 8, wobei Trocknungsschritt währen dem Trennschritt und/oder als ein nachfolgender Trocknungsschritt ausgeführt wird.

10. Verfahren nach einem der vorhergehenden Ansprüche ferner umfassend den Schritt des Schneidens und/oder Zerkleinerns des Artikels vor dem Abtrennschritt (a).

## Revendications

1. Procédé de traitement d'un article multicouche comportant au moins une couche constituée d'un premier matériau de matière plastique, au moins une couche d'un deuxième matériau de matière plastique et au moins une couche d'un troisième matériau présent entre la couche de premier matériau de matière plastique et la couche de deuxième matériau de matière plastique, dans lequel le premier matériau est du polytérephtalate d'éthylène amorphe (PET), le deuxième matériau de matière plastique est du polyéthylène (PE) et le troisième matériau est le copolymère éthylène / acétate de vinyle (EVA) ; le procédé comportant les étapes comprenant le fait de :
(a) séparer physiquement le premier matériau du deuxième matériau par l'intermédiaire d'une action de cisaillement et l'application de chaleur ; et
(b) séparer en le triant le premier matériau du deuxième matériau.

2. Procédé selon la revendication 1, dans lequel l'étape de séparation comporte de chauffer à un une température allant de 80 à 100°C.

3. Procédé selon l'une quelconque des revendications précédentes, dans lequel l'étape de séparation comporte d'introduire le produit dans une enceinte de séparation et de cisailler mécaniquement l'article contre lui-même et/ou contre une ou plusieurs lame(s) statique(s).

4. Procédé selon la revendication 3, dans lequel l'enceinte de séparation comporte un ou plusieurs élément(s) d'agitation.

5. Procédé selon l'une quelconque des revendications précédentes, dans lequel l'action de cisaillement est appliquée entre la première couche et la deuxième couche.

6. Procédé selon la revendication 1, dans lequel l'étape de tri comporte d'appliquer une force centrifuge pour séparer le premier matériau du second matériau.

7. Procédé selon la revendication 6, dans lequel l'étape de tri est réalisée dans un milieu liquide, tel que l'eau.

8. Procédé selon l'une quelconque des revendications précédentes comportant, de plus, l'étape (c) consistant à sécher le premier matériau trié.

9. Procédé selon la revendication 8, dans lequel l'étape de séchage est réalisée pendant l'étape de tri et/ou en tant qu'étape de séchage ultérieure.

10. Procédé selon l'une quelconque des revendications précédentes comportant, de plus, l'étape consistant à découper et/ou à déchiqueter l'article avant l'étape de séparation (a).
